# EUROPÄISCHE PATENTSCHRIFT

(11) **EP 0 951 114 B1**
(45) Veröffentlichungstag und Bekanntmachung des Hinweises auf die Patenterteilung: **24.01.2007**
(21) Anmeldenummer: 99104633.5
(22) Anmeldetag: 09.03.1999
(51) Int. Cl.: H02B 1/30, H02B 1/38

(54) **Schaltschrank mit wenigstens einer wahlweise fest angebrachten oder schwenkbaren Seitenwand**
Electrical cabinet with at least one side panel that can be selectively fixed or pivotably mounted
Armoire de distribution avec au moins un panneau latéral qui peut être monté sélectivement de façon fixe ou pivotant

(30) Priorität: 18.04.1998 DE 19817245
(43) Veröffentlichungstag der Anmeldung: 20.10.1999
(73) Patentinhaber: Rittal-Werk Rudolf Loh GmbH & Co. KG, 35745 Herborn (DE)
(72) Erfinder: Köhler, Martina, 35745 Herborn (DE); Reuter, Wolfgang, 57299 Burbach 5 (DE); Bonner, Rolf, 35745 Herborn-Amdorf (DE)
(74) Vertreter: Fleck, Hermann-Joseph

(56) Entgegenhaltungen:
- DE-U- 1 640 884
- DE-U- 29 711 262
- US-A- 5 202 818

## Beschreibung

Die Erfindung betrifft einen Schaltschrank mit einem Rahmengestell, das aus horizontalen und vertikalen Rahmenprofilen zusammengesetzt ist, wobei der von dem Rahmengestell umgebene Schaltschrankkorpus mittels einer Schranktür und Seitenwänden verkleidbar ist, wobei die Schranktür an einem der vertikalen Rahmenprofile anscharniert und um eine vertikale Schwenkachse verschwenkbar ist.

Ein solcher Schaltschrank ist aus der DE 41 03 785 C2 bekannt.

Der Innenraum solcher Schaltschränke ist mit elektrischen Schalteinheiten bestückt. Diese müssen im Laufe der Betriebszeit gewartet und im Bedarfsfall ersetzt werden. Oft sind die Schaltschränke dicht bestückt, so daß die Zugänglichkeit zu den einzelnen Einheiten stark eingeschränkt ist.

Die DE-U1-297 11 262 offenbart einen Schaltschrank, der ein Rahmengestell mit einem unteren und einem oberen Gestellrahmen aufweist. Die beiden Gestellrahmen sind mit vertikalen Rahmenprofilen verbunden. Das Rahmengestell umgibt einen Schaltschrankkorpus, der mittels vier identischer Verkleidungselemente an seinen vertikalen Seiten verschließbar ist. Die Verkleidungselemente sind als Schranktüren ausgebildet und an den vertikalen Rahmenprofilen des Rahmengestelles schwenkbar anscharniert.

Es ist Aufgabe der Erfindung, einen Schaltschrank der eingangs erwähnten Art zu schaffen, bei dem auf einfache Weise die Zugänglichkeit zum Schaltschrank-Innenraum verbessert ist.

Diese Aufgabe der Erfindung wird durch die Merkmale des Anspruchs 1.

Wenn die Zugänglichkeit zum Schaltschrank-Innenraum verbessert werden soll, so kann die herkömmliche Seitenwand anstatt der starren Verbindung schwenkbar an dem Rahmengestell angekoppelt werden. Bei einem solchen Schaltschrank ist dann der Schaltschrank-Innenraum sowohl durch die Schranktür als auch durch die Seitenwand hindurch zugänglich. Selbstverständlich können auch die anderen Seitenwände anscharniert sein, so daß der Innenraum des Schaltschrankes allseitig zugänglich ist.

Bei dem erfindungsgemäßen Schaltschrank ist die Seitenwand mit Befestigungsaufnahmen versehen, an denen wahlweise die Scharniere oder Seitenwandhalter angebracht sind, welche an dem zugehörigen vertikalen Rahmenprofil angeschlossen sind. Hierdurch müssen bei einer vorhandenen Seitenwand keine zusätzlichen Vorkehrungen zur Anbringung der Scharniere getroffen werden.

Hierbei ist es zusätzlich von Vorteil, wenn ein Schaltschrank dadurch gekennzeichnet ist, daß die am Rahmengestell anscharnierte Seitenwand an der der Scharnierseite gegenüberliegenden Verschlußseite mit Befestigungsaufnahmen versehen ist, an denen die Seitenwand im Schließzustand an herkömmlichen Seitenwandhaltern verriegelbar ist.

Die Verriegelung der Seitenwand kann dabei auf einfachste Art derart gelöst sein, daß die Befestigungsaufnahmen als Durchbrüche ausgebildet sind, durch die Befestigungsschrauben hindurchführbar und in Gewindaufnahmen der Seitenwandhalter einschraubbar sind.

Nach einer bevorzugten Ausgestaltungsvariante der Erfindung ist es vorgesehen, daß die anscharnierte Seitenwand auf ihrer dem Schaltschrank-Innenraum zugekehrten Innenseite eine umlaufende Dichtung aufweist, und daß das Scharnier außerhalb des von der Dichtung umgebenen Abdichtungsbereiches mit der Seitenwand verschraubt ist. Dadurch, daß die Scharniere außerhalb des Abdichtungsbereiches angeordnet sind, entfallen aufwendige Maßnahmen zur Abdichtung der Scharnier-Koppelstellen.

Bei einem erfindungsgemäßen Schaltschrank kann es vorgesehen sein, daß die Scharniere einer Seitenwand die vertikale Schwenkachse vor der nach außen gekehrten Frontseite der Seitenwand halten, um einen Öffnungswinkel von 180° zu ermöglichen. Hierdurch wird eine gute Zugänglichkeit zum Schaltschrank-Innenraum möglich.

Denkbar ist es aber auch, daß die Scharniere einer Seitenwand gegenüber der von der Seitenwand gebildeten Frontseite zurückversetzt angeordnet sind und einen Öffnungswinkel von bis zu 90° ermöglichen. Das zurückversetzte Scharnier wirkt hierbei optisch unauffällig. Zur erleichterten Montage der Scharniere kann es vorgesehen sein, daß die vertikalen Rahmenprofile eine zur Außenseite des Rahmengestelles gerichtete, in Profillängsrichtung verlaufende Außenaufnahme für Scharniere der Seitenwand aufweisen, die von zwei längsgerichteten seitlichen Anlageabschnitten begrenzt ist, an denen die Scharniere mit Zentrierflächen ausgerichtet sind. An den Anlageabschnitten lassen sich die Scharniere ausrichten.

Die Erfindung wird im folgenden anhand von in den Zeichnungen dargestellten Ausführungsbeispielen näher erläutert. Es zeigen:
- Fig. 1: in perspektivischer Darstellung ein Rahmengestell eines Schaltschrankes mit einer Schranktür und einer verschwenkbaren Seitenwand,
- Fig. 2: in perspektivischer Explosionsdarstellung einen Abschnitt eines vertikalen Rahmenprofiles des in Fig. 1 gezeigten Rahmengestelles mit einem Scharnier und der Seitenwand in Teildarstellung,
- Fig. 3: einen Horizontalschnitt durch das vertikale Rahmenprofil gem. Fig. 2 mit anscharnierter und geöffneter Seitenwand,
- Fig. 4: die Darstellung gem. Fig. 3 mit geschlossener Schranktür und
- Fig. 5: in perspektivischer Explosionsdarstellung einen Abschnitt eines vertikalen Rahmenprofiles des in Fig. 1 gezeigten Rahmengestelles mit einem Scharnier und der Seitenwand in Teildarstellung.

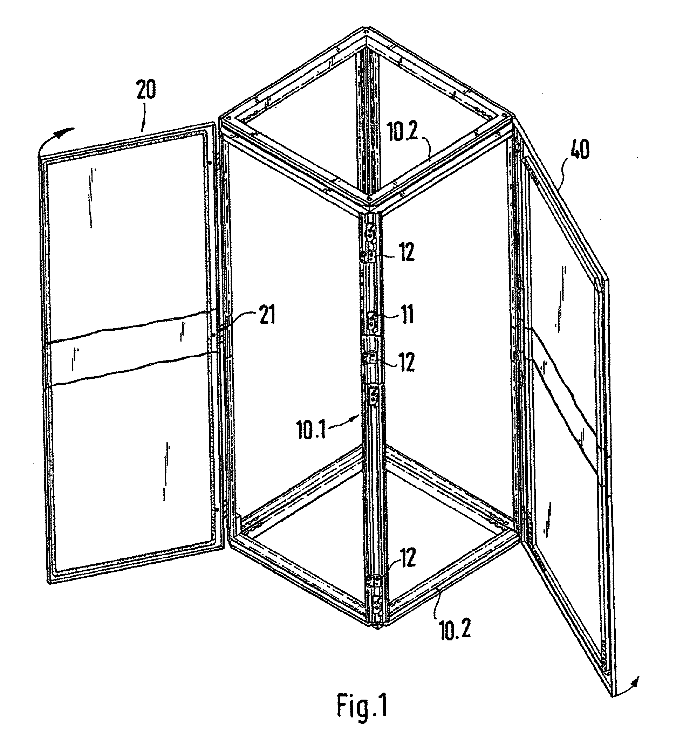

In der Fig. 1 ist ein Rahmengestell eines Schaltschrankes dargestellt. Dieses besteht aus zwölf Rahmenprofilen; vier vertikalen 10.1 und acht horizontalen 10.2. Die vertikalen Rahmenprofile 10.1 weisen alle die gleiche Querschnittsgeometrie auf. Ebenso sind die horizontalen, als Tiefen- und Breitenstreben ausgebildeten Rahmenprofile 10.2 querschnittsgleich aufgebaut. Die offene Vorderseite des Rahmengestelles kann mittels einer Schranktür 40 verschlossen werden. Die Schranktür 40 ist über Scharniere an eine der beiden vorderseitigen vertikalen Rahmenprofile 10.1 angebunden. Das andere vorderseitige vertikale Rahmenprofil 10.1 ist mit Schließelementen 11 ausgestattet. An diesen kann die Schranktür 40 im geschlossenen Zustand verriegelt werden. Die drei übrigen offenen Seiten des Rahmengestelles können mit Seitenwänden 20 verkleidet werden. Die Seitenwände 20 lassen sich wahlweise fest an das Rahmengestell anschrauben oder sie sind als zusätzliche Türen ausgebildet, die über Scharniere 21 schwenkbar an ein vertikales Rahmenprofil 10.1 angeschlossen sind. Um die Seitenwand 20 im eingeschwenkten Zustand festlegen zu können, werden Seitenwandhalter 12 verwendet.

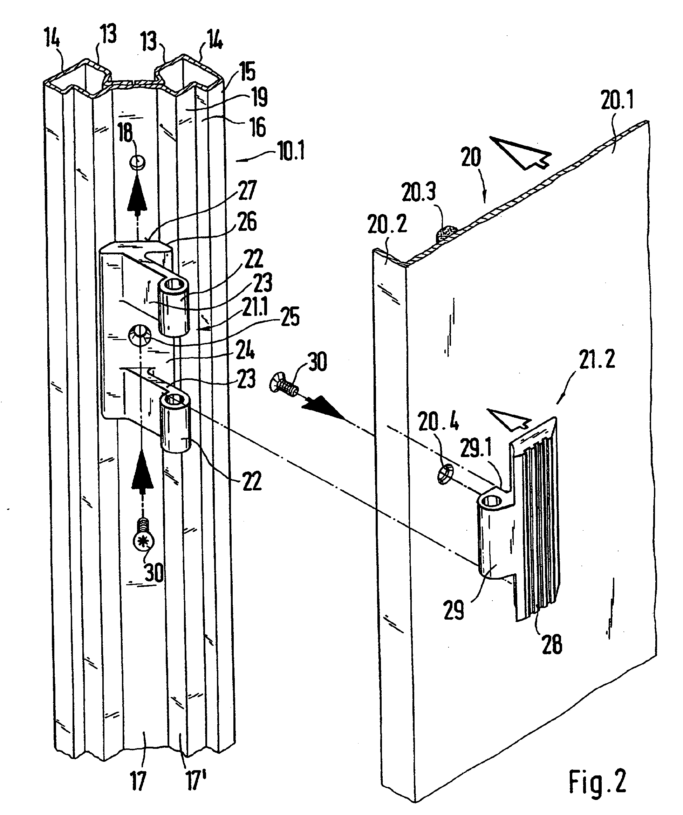

Die detaillierte Ausgestaltung zweier Scharniervarianten wird im folgenden anhand der Fig. 2 bis 5 näher erläutert. In der Fig. 2 ist ein Abschnitt eines vertikalen Rahmenprofiles 10.1 gezeigt. Das vertikale Rahmenprofil 10.1 besitzt zwei Befestigungsansätze, die über einen Verbindungsabschnitt 17 miteinander verbunden sind. Die Befestigungsansätze sind mit Profilseiten 13, 14 ausgestattet, die zum Innenraum des Schaltschrankes gerichtet sind. Die Profilseiten 13, 14 stehen dabei senkrecht zueinander und senkrecht zu den Außenseiten des Rahmengestelles. Der Verbindungsabschnitt 17 ist gegenüber der virtuellen Außenkante des Rahmengestelles zurückversetzt, so daß sich eine zur Außenseite des Rahmengestelles hin gerichtete Aufnahme ergibt. An den Verbindungsabschnitt 17 schließen sich zwei Anlageabschnitt 17' an. Diese stehen im rechten Winkel zu den zugekehrten Seiten des Rahmengestelles. Die Anlageabschnitte 17' gehen rechtwinklig in Absätze 19 über. Von den Absätzen 19 sind Abkantungen 16 rechtwinklig abgebogen, die in Anlagestege 15 übergehen. An dem vertikalen Rahmenprofil 10.1 kann ein Scharnier 21 befestigt werden. Das Scharnier 21 besteht aus zwei Scharnierteilen 21.1, 21.2. Das erste Scharnierteil 21.1 weist einen Befestigungsabschnitt 24 auf, der plattenformig ausgebildet ist. Auf diesem Befestigungsabschnitt 24 sind zwei Stege 23 zueinander beabstandet angeordnet. Die Stege 23 tragen Scharnierbolzenaufnahmen 22. Die von den Scharnierbolzenaufnahmen 22 durchsetzten Bohrungen fluchten miteinander. Zur Fixierung des ersten Scharnierteiles 21.1 an dem vertikalen Rahmenprofil 10.1 ist in den Befestigungsabschnitt 24 eine Schraubaufnahme 25 eingearbeitet. In diese Schraubaufnahme 25 kann eine Befestigungsschraube 30 eingeführt und in eine Bohrung 18 des Verbindungsabschnittes 17 des vertikalen Rahmenprofiles 10.1 eingeschraubt werden. Hierzu ist die Befestigungsschraube 30 als selbstschneidende Schraube ausgebildet. Das erste Scharnierteil 21.1 liegt im angeschraubten Zustand mit einer vertikalen Anlagefläche 27 an dem Verbindungsabschnitt 17 an. An die Anlagefläche 27 schließen sich im Winkel Zentrierflächen 26 an. Die Zentrierflächen 26 richten das erste Scharnierteil 21.1 an den Anlageabschnitten 17' aus. Das zweite Scharnierteil 21.2 kann an der Seitenwand 20 befestigt werden. Wie Fig. 2 erkennen läßt, besitzt die Seitenwand 20 eine ebene Wandung 20.1, die an ihren Rändern mit Abkantungen 20.2 versehen ist. Im Abstand zu diesen Abkantungen 20.2 ist eine Dichtung 20.3 auf die Innenseite der Seitenwand 20 aufgeschäumt. Im Bereich zwischen der Abkantung 20.2 und der Dichtung 20.3 ist die Wandung 20.1 von Befestigungsaufnahmen 20.4 durchsetzt. Durch diese Befestigungsaufnahmen 20.4 kann rückseitig eine Befestigungsschraube 30 eingeführt und in das zweite Scharnierteil 21.2 eingeschraubt werden. Das zweite Scharnierteil 21.2 liegt im verschraubten Zustand mit einem Befestigungsabschnitt 28 auf der Vorderseite der Wandung 20.1 an. Der Befestigungsabschnitt 28 trägt eine Scharnierbolzenaufnahme 29, die von einer Bohrung mit vertikaler Bohrungsachse durchdrungen ist. Die Scharnierbolzenaufnahme 29 ist mit einer Anlagefläche 29.1 ausgestattet. Diese Anlagefläche 29.1 richtet sich an der Abkantung 20.2 aus. Zur Komplettierung des Scharnieres 21 werden die Scharnierbolzenaufnahmen 22, 29 der beiden Scharnierteile 21.1, 21.2 fluchtend zueinander angeordnet. Anschließend kann ein Scharnierstift in diese Scharnierbolzenaufnahmen 22, 29 eingeführt werden. Wie Fig. 2 erkennen läßt, ist die vertikale Scharnierachse, die von den Scharnieren 21 gebildet ist, vor der Wandung 20.1 angeordnet. Hierdurch läßt sich erreichen, daß die Seitenwand um 180° aufgeschwenkt werden kann.

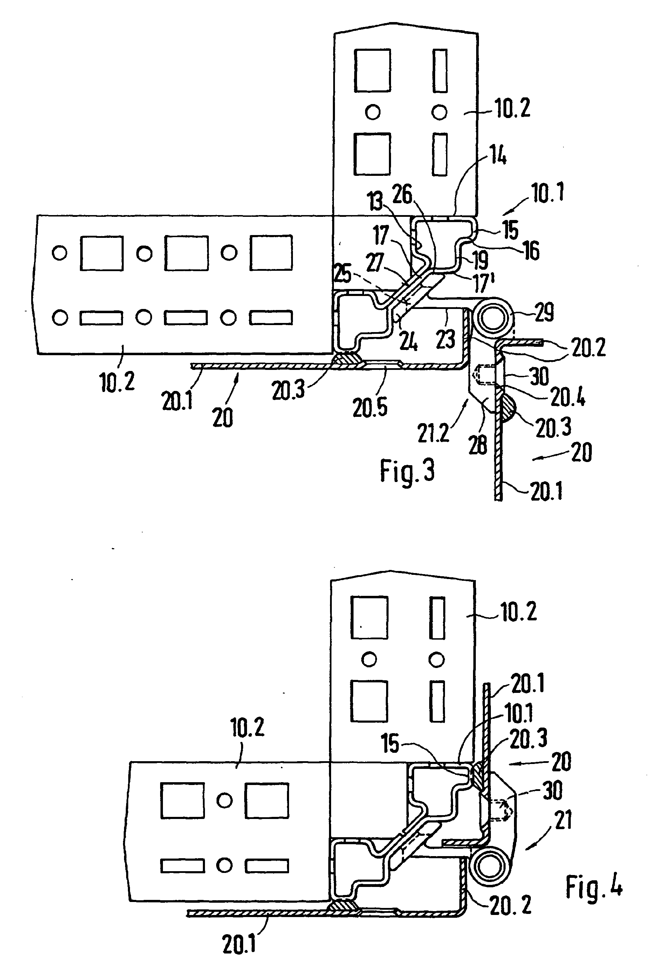

In der Fig. 3 ist das Rahmengestell gem. Fig. 1 im Horizontalschnitt und in Teildarstellung gezeigt. Aus dieser Darstellung läßt sich der Querschnitt des vertikalen Rahmenprofiles 10.1 deutlich erkennen. Wie bereits vorstehend erläutert, kann die Seitenwand 20 aufgrund der Tatsache, daß die Scharnierachse vor der Wandung 20.1 gehalten ist, um 180° aufgeschwenkt werden. Aus der Fig. 3 läßt sich weiterhin eine Seitenwand 20 erkennen, die an der Rückseite des Rahmengestelles befestigt ist. Diese Seitenwand 20 ist baugleich mit der anscharnierten Seitenwand 20 ausgebildet. Sie besitzt Befestigungsaufnahmen 20.5, die im Bereich zwischen der umlaufenden Dichtung 20.3 und der Abkantung 20.2 in die Wandung 20.1 eingebracht sind. Durch diese Befestigungsaufnahmen 20.5 hindurch können Befestigungsschrauben eingeführt und in Seitenwandhalter 12, wie sie im einzelnen der Fig. 1 zu entnehmen sind, eingeschraubt werden.

In der Fig. 4 ist die Seitenwand 20 in der geschlossenen Stellung gezeigt. Aus Gründen der Übersichtlichkeit wurde die Fig. 4 nicht mit allen Bezugszeichen versehen. Fig. 4 veranschaulicht, daß die Dichtung 20.3 der Seitenwand 20 im geschlossenen Zustand auf den zugeordneten Anlagesteg 15 aufgedrückt ist. Hierdurch ist der Innenraum des Schaltschrankes vor Feuchtigkeitseinflüssen geschützt.

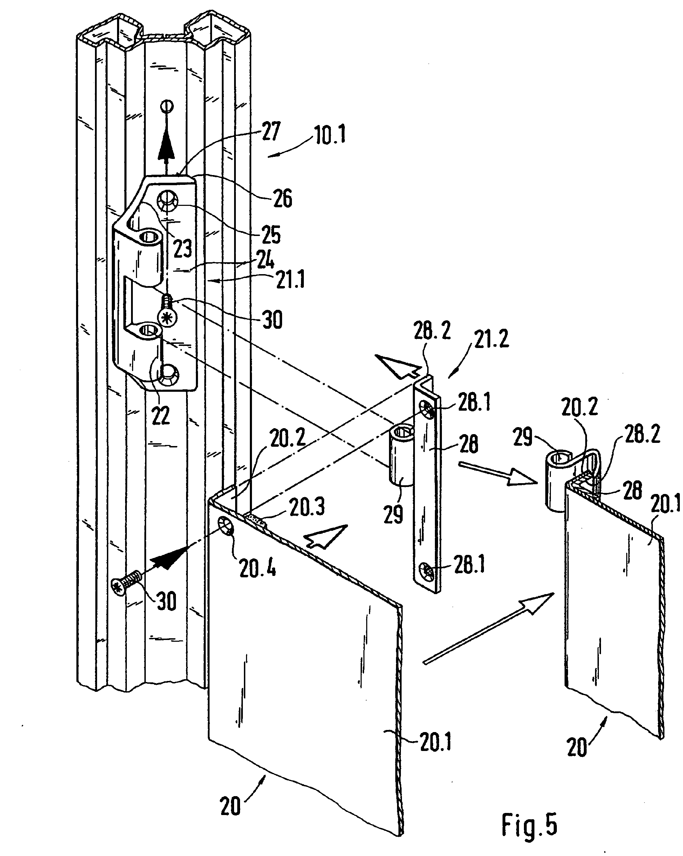

In der Fig. 5 ist eine Ausgestaltungsvariante eines Scharnieres 21 gezeigt. Das Scharnier 21 besitzt wieder zwei Scharnierteile 21.1, 21.2. Das Scharnierteil 21.1 ist ähnlich aufgebaut wie das Scharnierteil 21.1, welches in den Fig. 2 bis 4 dargestellt ist. Ein Unterschied besteht darin, daß die Scharnierbolzenaufnahmen 22 nunmehr im Bereich hinter der durch die Wandung 20.1 der Seitenwand 20 gebildeten Ebene gehalten sind. Damit ist auch die vertikale Scharnierachse gegenüber der Wandung 20.1 zurückversetzt.

Im Abkantungsbereich der Seitenwand 20 ist das zweite Scharnierteil 21.2 angeordnet. Dieses zweite Scharnierteil 21.1 ist als Stanz-Biege-Teil aus einem Stahlblech-Zuschnitt gefertigt. Es hat einen vertikalen Befestigungsabschnitt 28 von dem rechtwinklig ein Anlageabschnitt 28.2 abgekantet ist. Der Befestigungsabschnitt 28 liegt auf der Rückseite der Seitenwand 20 plan auf. Mit dem Anlageabschnitt 28.2 kann das zweite Scharnierteil 21.2 an der Abkantung 20.2 der Seitenwand 20 ausgerichtet werden. Der Anlageabschnitt 28.2 trägt die Scharnierbolzenaufnahme 29. Bei diesem Scharnier 21 ist aufgrund der Anordnung der Scharnierachse ein Öffnungswinkel von 90° verwirklichbar.

## Patentansprüche

1. Schaltschrank mit einem Rahmengestell, das aus horizontalen und vertikalen Rahmenschenkeln (10.2,10.1) zusammengesetzt ist, wobei der von dem Rahmengestell umgebene Schaltschrankkorpus mittels einer Schranktür (40) und Seitenwänden verkleidbar ist, wobei die Schranktür (40) an einem vertikalen Rahmenprofil (10.1) anscharniert und um eine vertikale Schwenkachse verschwenkbar ist und wobei wenigstens eine der Seitenwände (20) an dem Rahmengestell wahlweise fest angebracht oder um eine vertikale Schwenkachse verschwenkbar anschamierbar (Scharniere 21)) ist, wobei die Seitenwand (20) mit Befestigungsaufnahmen (20.4) versehen ist, an denen wahlweise die Scharniere (21) oder Seitenwandhalter(12) angebracht sind, welche an dem zughörigen vertikalen Rahmenprofil (10.1) angeschlossen sind.

2. Schaltschrank nach Anspruch 1,
**dadurch gekennzeichnet,**
**dass** die am Rahmengestell anscharnierte Seitenwand (20) an der der Scharnierseite gegenüberliegenden Verschlussseite mit Befestigungsaufnahmen (20.5) versehen ist, ab denen die Seitenwand (20) im Schließzustand an herkömmlichen Seitenwandhaltern (12) verriegelbar ist.

3. Schaltschrank nach Anspruch 1 oder 2,
**dadurch gekennzeichnet,**
**dass** die Befestigungsaufnahme (20.5) als Durchbrüche ausgebildet sind, durch die Befestigungsschrauben hindurch führbar und in die Gewindeaufnahmen der Seitenwandhalter (12) einschraubbar sind.

4. Schaltschrank nach einem der Ansprüche 1 bis 3,
**dadurch gekennzeichnet,**
**dass** die anscharnierte Seitenwand (20) auf ihrer dem Schaltschrank-Innenraum zugekehrten Innenseite eine umlaufende Dichtung (20.3) aufweist, und
**dass** das Scharnier (21) außerhalb des von der Dichtung (20.3) umgebenen Abdichtungsbereichs mit der Seitenwand (20) verschraubt ist.

5. Schaltschrank nach einem der Ansprüche 1 bis 4,
**dadurch gekennzeichnet,**
**dass** die Scharniere (21) einer Seitenwand (20) die vertikale Schwenkachse vor der nach außen gekehrten Frontseite der Seitenwand (20) halten, um einen Öffnungswinkel von 180° zu ermöglichen.

6. Schaltschank nach einem der Ansprüche 1 bis 5,
**dadurch gekennzeichnet,**
**dass** die Scharniere (21) einer Seitenwand (20) gegenüber der von der Seitenwand (20) gebildeten Frontseite zurückversetzt angeordnet ist und einen Öffnungswinkel von bis zu 90° ermöglicht.

7. Schaltschrank nach einem der Ansprüche 1 bis 6,
**dadurch gekennzeichnet,**
**dass** die vertikalen Rahmenprofile (10.1) eine zur Außenseite des Rahmengestelles gerichtete in Profillängsrichtung verlaufende Außenaufnahme für Scharniere (21) der Seitenwand (20) aufweisen, die von zwei längsgerichteten seitlichen Anlageabschnitten (17) begrenzt ist, an denen die Scharnier (21) mit Zentrierflächen (26) ausgerichtet sind.

## Claims

1. Switch cabinet having a framework which is composed of horizontal and vertical frame legs (10.2, 10.1), the switch cabinet body enclosed by the framework being able to be covered by means of a cabinet door (40) and side walls, the cabinet door (40) being hinged to a vertical frame profile (10.1) and being able to pivot about a vertical pivot axis, and at least one of the side walls (20) optionally being fixedly attached to the framework or being able to be hinged (hinges 21) thereto so that it can pivot about a vertical pivot axis, the side wall (20) being provided with fastening mounts (20.4) to which are optionally attached the hinges (21) or side wall retainers (12) which are connected to the associated vertical frame profile (10.1).

2. Switch cabinet according to Claim 1, **characterized in that** the side wall (20) hinged to the framework is provided on its closure side opposite the hinge side with fastening mounts (20.5) at which the side wall (20), when in the closed state, can be locked to conventional side wall retainers (12).

3. Switch cabinet according to Claim 1 or 2, **characterized in that** the fastening mounts (20.5) are formed as apertures through which the fastening screws can be guided and screwed into the threaded mounts of the side wall retainers (12).

4. Switch cabinet according to one of Claims 1 to 3, **characterized in that** the hinged side wall (20) has a peripheral seal (20.3) on its inner side facing the interior of the switch cabinet, and **in that** the hinge (21) is screwed to the side wall (20) outside the sealing region enclosed by the seal (20.3).

5. Switch cabinet according to one of Claims 1 to 4, **characterized in that** the hinges (21) of a side wall (20) maintain the vertical pivot axis in front of the outward facing front side of the side wall (20) so as to allow an opening angle of 180°.

6. Switch cabinet according to one of Claims 1 to 5, **characterized in that** the hinges (21) of a side wall (20) are set back from the front side formed by the side wall (20) and allow an opening angle of up to 90°.

7. Switch cabinet according to one of Claims 1 to 6, **characterized in that** the vertical frame profiles (10.1) have an outer mount for hinges (21) of the side wall (20) that extends in the longitudinal direction of the profiles and is directed towards the outside of the framework, this outer mount being delimited by two longitudinally directed lateral bearing sections (17) on which the hinges (21) are aligned by means of centring faces (26).

## Revendications

1. Armoire de distribution comprenant une baie qui est composée de branches de cadre horizontales et verticales (10.2, 10.1), dans laquelle le corps d'armoire de distribution entouré par la baie peut être habillé au moyen d'une porte d'armoire (40) et de panneaux latéraux, dans laquelle la porte d'armoire (40) est articulée sur charnières à un profilé de cadre vertical (10,1) et peut pivoter autour d'un axe de pivotement vertical et dans laquelle au moins un des panneaux latéraux (20) est monté au choix de manière fixe sur la baie ou de manière articulée sur charnières (charnières 21) pour pouvoir pivoter autour d'un axe de pivotement vertical, dans laquelle le panneau latéral (20) est pourvu de logements de fixation (20.4) sur lesquels sont montés au choix les charnières (21) ou les supports (12) de panneau latéral qui sont attachés au profilé de cadre (10,1) vertical associé.

2. Armoire de distribution selon la revendication 1, **caractérisée en ce que** le panneau latéral (20) articulé sur charnières à la baie est pourvu, sur le côté fermeture opposé au coté charnière, de logements de fixation (20.5) à partir desquels le panneau latéral (20), à l'état fermé, peut être verrouillé à des supports (12) de panneau latéral conventionnels.

3. Armoire de distribution selon la revendication 1 ou 2, **caractérisée en ce que** les logements de fixation (20.5) sont configurés comme des passages par lesquels des vis de fixation peuvent être passées et peuvent être vissées dans les logements filetés des supports (12) de panneau latéral.

4. Armoire de distribution selon l'une quelconque des revendications 1 à 3, **caractérisée en ce que** le panneau latéral (20) articulé sur charnières présente, sur sa face intérieure adjacente à l'intérieur de l'armoire de distribution, un joint (20.3) périphérique et **en ce que** la charnière (21) est vissée au panneau latéral (20) en dehors de la région d'étanchéité entourée par le joint (20.3).

5. Armoire de distribution selon l'une quelconque des revendications 1 à 4, **caractérisée en ce que** les charnières (21) d'un panneau latéral (20) maintiennent l'axe de pivotement vertical devant la face frontale tournée vers l'extérieur du panneau latéral (20) pour permettre un angle d'ouverture de 180°.

6. Armoire de distribution selon l'une quelconque des revendications 1 à 5, **caractérisée en ce que** les charnières (21) d'un panneau latéral (20) sont disposées de manière décalée vers l'arrière par rapport à la face frontale formée par le panneau latéral (20) et permettent un angle d'ouverture allant jusqu'à 90°.

7. Armoire de distribution selon l'une quelconque des revendications 1 à 6, **caractérisée en ce que** les profilés de cadre verticaux (10.1) présentent, pour des charnières (21) du panneau latéral (20), un logement extérieur disposé sur le côté extérieur de la baie, s'étendant dans le sens de la longueur du profilé, qui est limité par deux sections d'appui latérales (17) sur lesquelles les charnières (21) sont alignées par des surfaces de centrage (26).
